(19) Europäisches Patentamt
European Patent Office
Office européen des brevets

(11) **EP 2 273 433 A1**

(12) **EUROPEAN PATENT APPLICATION**

(43) Date of publication:
**12.01.2011 Bulletin 2011/02**

(51) Int Cl.:
**G06Q 10/00** (2006.01)   **G06Q 30/00** (2006.01)

(21) Application number: **10167218.6**

(22) Date of filing: **24.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **24.06.2009 US 219792 P**

(71) Applicants:
• **Segal, Edo**
  **46330 Herzeliya (IL)**

• **Seror, Benjamin**
  **62157 Tel Aviv (IL)**

(72) Inventors:
• **Segal, Edo**
  **46330 Herzeliya (IL)**
• **Seror, Benjamin**
  **62157 Tel Aviv (IL)**

(74) Representative: **Modiano, Micaela Nadia et al**
  **Modiano & Partners**
  **Thierschstrasse 11**
  **80538 München (DE)**

(54) **Method and system for creating a multi-level network**

(57)    A method and system for recruiting support, the method including connecting a processor of an organization seeking supporters to a processor of a central organizing body (COBP), providing a software application for connecting a device, including a processor, of at least one supporter of the organization to the COBP; coupling a processor of at least one source of advertising content to the COBP; transferring the advertising content by the COBP to at least one of the supporters; recruiting by the supporter at least one hierarchical child supporter to create a multi-level network of supporters; calculating advertising revenue associated with each said supporter based on pre-selected criteria; and calculating recognition for each supporter based on the calculated advertising revenue for that supporter and for the multi-level network of supporters created by that supporter.

Figure 1

## Description

### FIELD OF THE INVENTION

The present invention relates to a method and system for creating a multi-level social network, to be used for fundraising or provide other support for an organization.

### BACKGROUND OF THE INVENTION

Many organizations, such as not-for-profit organizations, rely largely on donations from their supporters in order to be able to perform actions towards their intended goals. Many supporters of such organizations believe in the organization and its activities enough that they donate funds to these organizations. In the US, individuals are responsible for 75% of all contributions to such organizations. Many other supporters would like to provide support, but can not afford to do so financially. Particularly during periods of economic crisis, individuals still desire to give but have fewer means to do so.

A wider Internet presence and online fundraising could answer part of the challenge, but NPOs haven't yet succeeded in utilizing this medium efficiently. The challenge that rises is how to leverage the NPO human network and the power of the Internet to raise significant funds for the NPOs. NPO supporters, who want to provide support to the organization, but lack financial means to do so, are in need of a method and system for contributing to, and being involved with, their favorite cause while exerting no financial efforts.

Various social networks are known, such as Facebook and MySpace. Such social networks are not geared for use in connection with fundraising and/or non-monetary support by supporters of NPOs.

Accordingly, there is a long felt need for a method and a system for fundraising and networking by supporters of an organization, and it would be desirable to have such a method and system which raises funds for NPOs by supporters without the need for a monetary contribution by the supporters, themselves.

### SUMMARY OF THE INVENTION

The present invention relates to a method and system for fundraising for various organizations, particularly NPOs, from advertising revenues. This is accomplished by utilization of a social network of supporters who support their favorite cause by being exposed to advertisements, without having to provide any financial contribution from their own funds. According to the present invention, a networked organizational social structure of supporters in general and, in particular, an Internet managed implementation of an organizational social structure, is used to encourage fundraising or support through advertising and interconnection between supporters, wherein the supporters do not make a monetary contribution yet receive recognition which is proportional to the amount of support or funds raised for their favorite NPO which is related to their efforts.

According to some embodiments, the present invention provides an organizational multi-level networked mechanism through the display of third party advertising to a willing and receptive circle of supporters, who can generate financial support for the organization that they support, without actually making monetary donations themselves. A good way to encourage additional support is by giving the supporters a form of recognition for recruiting new supporters and/or using the applications and services provided through the network. The recognition provided in this invention is non-monetary. The non-monetary recognition acknowledges how much financial support a supporter generated as a result of his recruiting activities, viewing of advertisements and participation in various applications, as well as by viewing of advertisements and participation in various applications of the supporters that he recruited, and the new supporters introduced into the multi level network of supporters as a result of his/her efforts.

According to the present invention, there is also provided a method for recruiting support, the method including connecting a processor of an organization seeking supporters to a processor of a central organizing body (COBP), providing a software application for connecting a device, including a processor, of at least one supporter of the organization to the COBP; coupling a processor of at least one source of advertising content to the COBP; transferring the advertising content by the COBP to at least one of the supporters; calculating advertising revenue associated with each supporter based on pre-selected criteria; and calculating recognition for each supporter based on calculated advertising revenue for that supporter.

According to a preferred embodiment of the invention, the method further includes recruiting by the supporter of at least one hierarchical child supporter to create a multi-level network of supporters; and the step of calculating recognition includes calculating recognition also based on calculated advertising revenue for a multi-level network of supporters created by that supporter.

### BRIEF DESCRIPTION OF THE DRAWINGS

The present invention will be further understood and appreciated from the following detailed description taken in conjunction with the drawings in which:

**Figure 1** is a schematic illustration of a system for creating a multi-level social network, constructed and operative in accordance with one embodiment of the present invention;

**Figure 2a** is an illustration of an exemplary hierarchical network;

**Figure 2b** is a table illustrating calculation of recognition values, according to one embodiment of the invention;
Figure 3 is a block diagram illustration of a method for bringing on board a new supporter, according to one embodiment of the invention;
Figure 4a is a block diagram illustration of a method for bringing on board a new supporter, according to an alternative embodiment of the invention; and
Figure 4b is a block diagram illustration of a method for bringing on board a new supporter, according to a further embodiment of the invention.

## DETAILED DESCRIPTION OF THE INVENTION

The present invention relates to an innovative method for raising money or support for an organization or individual, and strengthening the connection between an organization, particularly a fundraising organization, and its supporters, as well as a method for attracting new supporters. While the system and method can also be used to create a support group for an existing or new organization, not necessarily interested in fundraising, it is particularly suited for raising money for non-profit organizations (NPOs), and will be described as such below.

The present solution allows supporters to create their own community of supporters and become active fundraisers. It provides a non monetary recognition methodology which encourages supporters to add more supporters to the community, as well as to spend as much time as possible with the application, in order to generate support, and possibly funds or other appropriate tangible donation, for the organization. Since the fundraising method of the invention relies exclusively on advertising, no donations are sought from the supporters.

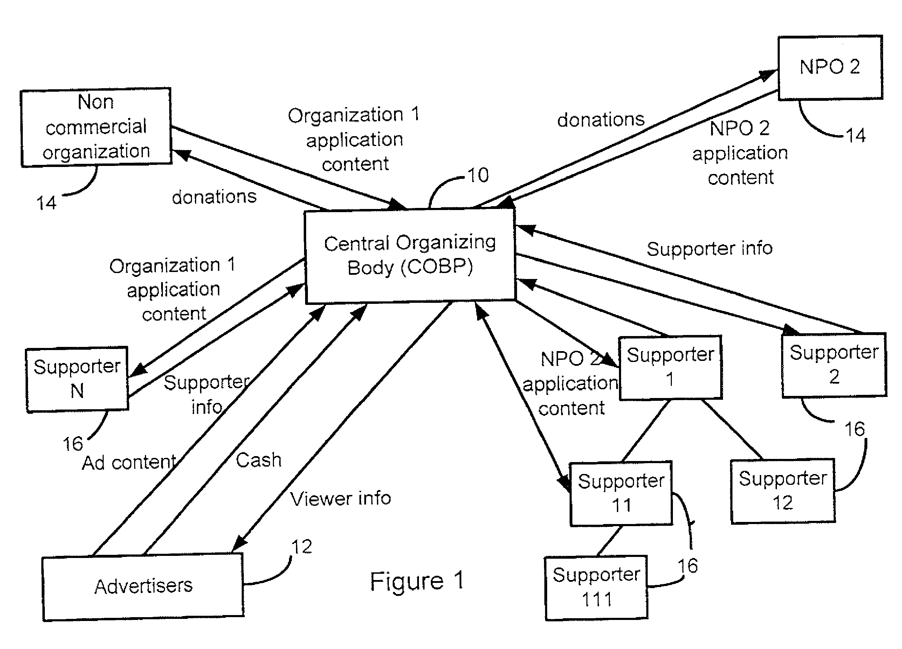

According to preferred embodiments of the invention, the present solution is adapted and configured to build and operate a win-win-win ecosystem for NPOs, their supporters and advertisers. The proposed solution, illustrated schematically in Figure 1, is to build and operate a system including three parties: 1) A central organizing body 10; 2) At least one organization 14 interested in raising funds and/or building a network; and 3) A plurality of supporters 16 who wish to support organization 14. Optionally, a source of revenue 12 may be added to the system, coupled to the central organizing body 10.

The central organizing body 10 collects data about supporters who register or sign up for the network, and provides applications and services and operates the advertising and content distribution network (possibly providing donation collection services). Such applications and services can be branded with the logos, colors and slogans of the organization and can be customized for each organization. Thus, the particular content of the various applications can change, depending upon the nature of the organization for which funds are being raised, i.e., a game or products relating to recycling for a Nature Protection Society.

Organization 14 can be any organization interested in raising funds and/or building a network for distributing content thereto. Typically, the organization has content to provide to supporters through utilization of existing communication channels which can be provided via the network connection. The organization also promotes applications of the central organizing body 10 to its supporters, where investment is not required. A plurality of such organizations 14 can be coupled, independently, to the central organizing body. Content distribution and calculation of recognition among the networks of supporters will be carried out separately by the central organizing body for each such organization.

Supporters 16 are people who support organization 14, e.g., an NPO, and are willing to be exposed to advertisements of the advertisers through applications of the organizing body 10, thus generating money for the fundraising organization, and/or who are willing to spread the content and messages of organization 14 among their friends, to lobby and create their own support community, in return for receipt of recognition from the NPO. The organizing body 10 provides applications with the branding of the NPO, or other organization, which can be in the form of a portal, a screen saver, or can tap into a web-browser, acting as a toolbar for example, or re-render web pages with advertisements that are relevant to the cause of the organization. In addition, there is an option to download the applications, hence allowing supporters to interact with the applications off line, as well as during browsing activity. Information will be synchronized with the organizing body and the entire supporter community once Internet connectivity is re-established by supporters working off-line.

Preferably, the supporters create a multi-level marketing-type of organization. Such an organization is in the form of a tree, where each supporter is at the head of a hierarchy of multiple levels. Those directly recruited or introduced to the network by a supporter form the first generation (or children) of that supporter. Those brought in by the supporter's first generation are children of that supporter's second generation, and so forth. It will be appreciated that each hierarchical child will become, himself, a supporter of the organization by connecting to the central organization body and can recruit his own network of hierarchical children. The participation of the supporter him- or herself and of other supporters he introduces to the network are rewarded by recognition, and generate advertising revenues for the central organizing body and/or the fundraising organization. This multi-level structure of supporters also provides means for encouraging the supporters to be active advocates of the cause that they support. Central organizing body 10 keeps records of funds raised through the activities of each supporter, both by himself and by those he or she brought into the network, and circulates recognition of his/her fundraising achievements among the other supporters in the network. Supporters' fundraising activities can include promoting organization's network to their friends and acquaintances, encouraging them to become members in the network and viewers of the advertisements, as well as of content being circulated by the organization. As additional members join the multi-level network, the supporters who invited them will receive due recognition derived from the activities of the new members, in addition to their own activities. The new members are considered hierarchical children of the supporter who recruited them into the network.

The source of revenue **12** is typically one or more advertisers who wish to advertise on an on-line network and reach a qualified and targeted audience, and who are willing to pay for the right to display their advertisements on the network. In this case, the applications and services provided by the organizing body can be funded by advertising revenue paid by advertisers in return for exposure of the supporters in the network to their advertising content, or funded directly by an organization seeking supporters. Alternatively, the source of revenue can be an organization which is willing to pay the organizing body to set up and expand its network. In this case, recognition can be provided for "referral revenue", the revenue generated to the central organizing body as a function of the size of the network created by each supporter (i.e., the number of supporters added to the network due to that supporter's efforts and his hierarchical children's efforts). Thus, the central organizing body will receive revenue as a function of the recognition values of the various supporters, according to pre-defined criteria.

An alternative embodiment of the method can also be used by politicians, sports clubs, or other groups or organizations who wish to build a base of supporters by sending content through organizing body **10** to potential supporters **16** who bring in additional supporters, with or without raising donations for the politician from advertisers. The politician or club may or may not pay the organizing body for its services in building the network. Their supporters receive recognition according to the number of friends brought into the supporters' group, without any obligation on the part of the politician or organization towards highly recognized supporters.

The method further includes providing an application, which can be downloaded or accessible over the Internet, for potential new supporters of an organization, who are interested in raising funds or becoming part of a support network, the application permitting the viewing of content from the organization and advertisements sent by a plurality of advertisers. The advertising revenue is paid to the central organizing body, which may forward a portion as a donation to the organization. The advertising revenue associated with or generated by each supporter is calculated on the basis of criteria selected and agreed upon in advance between the organizing body and the advertisers. Some examples include the length of time of viewing advertisements, the number of entries to an advertiser's web site, the value of on-line purchases of advertised products, or any other suitable measure. The central organizing body, in turn, uploads content from the organization and advertisements from the advertisers, which are to be displayed to the supporters. The supporters and/or the organization recommend that other potential supporters use the application, thereby forming a multi-level social network of supporters of that organization. The various supporters who recommend the fundraising organization and/or the organizing body to their friends receive non-monetary recognition which is proportional to the size and revenues generated by the support community which they have created. All members of the network or any part thereof, can view the overall financial contribution of each member to the organization, preferably in real time, as well as the contribution of the network of their support community to the same organization.

As a non-limiting example, the application can be distributed as a widget. The widget is a desktop application, or for use on hand held electronic computing devices, visible to the supporter at all times, while surfing the web, writing Word documents or reading e-mails. The widget can be the anchor application on which a variety of web 2.0 and social networking features can be provided within each version of the product. The widget basic functionality preferably includes:

1. **An advertising area** - where banners are displayed for exposure to the supporter;

2. **A "circle of donors" tool** - which allows supporters to promote/distribute an application and build their own network (called herein a "circle of donors" or "support community")

3. **Fundraising statistics** - presents to the supporters the amount of money that was raised for their NPO by all the supporters using the application. The application may also display to the supporters the contribution or support raised directly by them and indirectly through the network community of donors or supporters which they have created.

4. **NPO messages -** which keep the supporters connected and up-to-date with their organization's activities, programs, messages and other content.

This application may provide a portal on the screens of these electronic devices, allowing the organization to stream content, such as information content, videos, advertising, games, etc., as well as content specific to the user, for him/her to view or interact with. Alternatively, the application can be a screen saver, or tap into a web-browser, as a toolbar for example, or re-render web pages with advertisements that are relevant to the cause. The application will enable users to invite other users into the network, in order to expand the network. The network expansion, as well the as the activities of the supporters, can be tracked and managed, preferably by the central organizing body, in the hierarchical referral mechanism. The system may also include a feedback loop, for collecting, storing and providing information relating to the number of hierarchical descendents and their activities within the multi-level network, back to the original supporter, who recruited them into the network, as well as to the organization. Such information may permit the original supporter and the hierarchical ancestors to view the size of network they have created, and its usefulness to the organization, as well as their actual activities.

The stored information may include, for example, a market spread of the supporters populating the network, as well as the population base of supporters viewing the advertisements. This information can be used to encourage advertisers to use the network and pay money to the organization, in return for an agreed upon amount of viewing time by the relevant target market of the network's population. Consequently, the network of supporters provides financial support to the organization by simply using the organization's application, recruiting other users into the network, and viewing advertisements or other content circulated in the network. Additionally, this feedback loop will allow a supporter to see how much financial support was generated for the NPO by the size and activities of the circle of supporters that he is responsible for.

The applications roadmap preferably includes a wide range of Web 2.0 and social networking functionalities which will be offered to the supporters, for example call-to-action, petitions, blogs, dating and more. The advertising based fundraising concept is the connecting link between all the applications and services. Supporters merely need to use the services or applications of the organizing body in order to generate money and/or support for their favorite organization and receive recognition from the organization for doing so. This recognition is calculated as described below, for each supporter according to his or her contribution.

A novel method of providing recognition for recruiting support is also provided according to the invention. According to this method, the exposure of the supporters to the advertisements, both in terms of time of exposure and the number of supporters who have been exposed, translates into donations or other support that were generated by each supporter himself and by the supporters in the network community which he recruited (i.e., those brought in by the supporters he brought in).

Recognition methods according to the present invention may include tracking the financial support for each NPO generated by each supporter and displaying them to all supporters in the network, thus providing the supporter with a sense of pride. An extra bonus can be provided by means of games available within the networked environment or coupons from advertisers, which are awarded to a supporter proportionally to his/her fundraising achievements. The generated support is measured by considering the activities of the supporter, as well as the activities of his hierarchical children within the network structure.

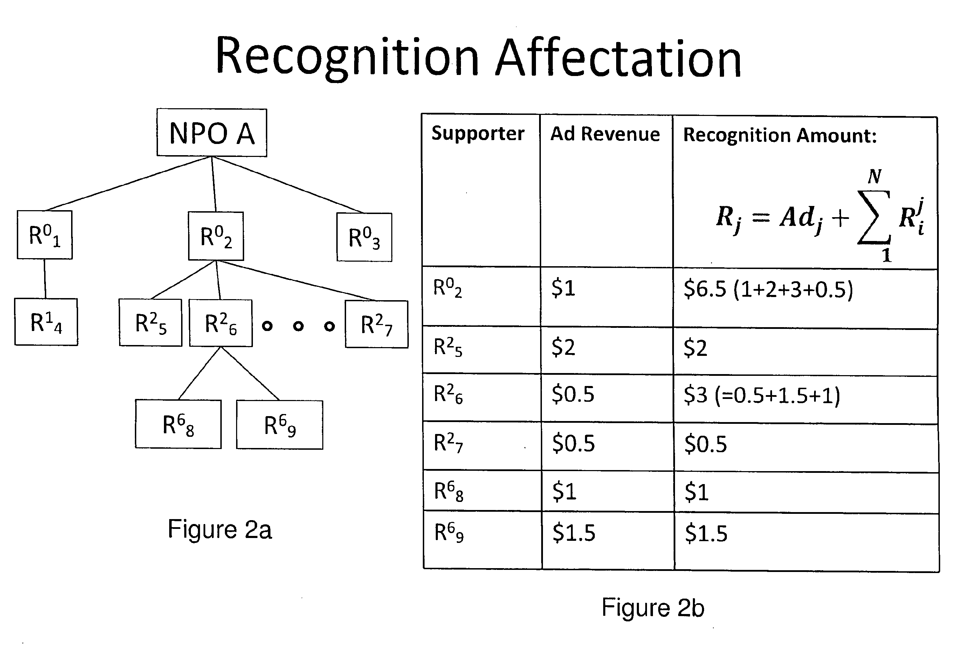

The method of calculation of the recognition awarded to a supporter, according to an embodiment of the present invention, is as follows. The recognition score of each supporter is constructed of two main quantities. 1) The donations that the supporter generated by being exposed to advertisement, usage of coupons, playing games, etc; and 2) The donations that were generated by the community of supporters which he created. For purposes of the recognition calculations, the hierarchy of supporter A includes any supporter who was brought on-board by supporter A or was directly recruited by any of his "children" or children's children in the hierarchy. One example of such a hierarchy is illustrated schematically in **Figure 2a.** There is no limit to the number of "children" and levels one can have in his hierarchy. This recognition calculation method reflects the entire monetary contribution of a supporter to the organization that he supports.

One method of calculating the recognition R due to supporter j can be described as follows:

$$\mathrm{Rj} = \mathrm{Adj} + \Sigma^N_1\, \mathrm{R}^j_i$$

where Adj is the advertising revenue generated by supporter j, and
$R_i = R^j_i$ = the recognition value of supporter i whose parent is j
Sample calculations are set out in the table in **Figure 2b.** As can be seen, since $R^6_8$, $R^6_9$ and $R^2_5$ have no children in the hierarchy, their recognition value equals the revenue they generated from advertising. However, $R^2_6$ does have children, so his recognition value is the summation of his own advertising revenue and the recognition values of his children, $R^6_8$ and $R^6_9$.

It will be appreciated that, for some organizations, the revenue received by the central organizing body can be converted to another, non-monetary, source of value, for purposes of calculating a recognition value for each supporter. For example, for an NPO that protects nature, the monetary revenue can be transformed to the number of trees planted in the name of each supporter, or in another organization, it can appear as the number of bags of rice provided to a needy community, and so on. Thus, once the revenue has been calculated, it can be transformed to the type of recognition that is best suited to each particular organization.

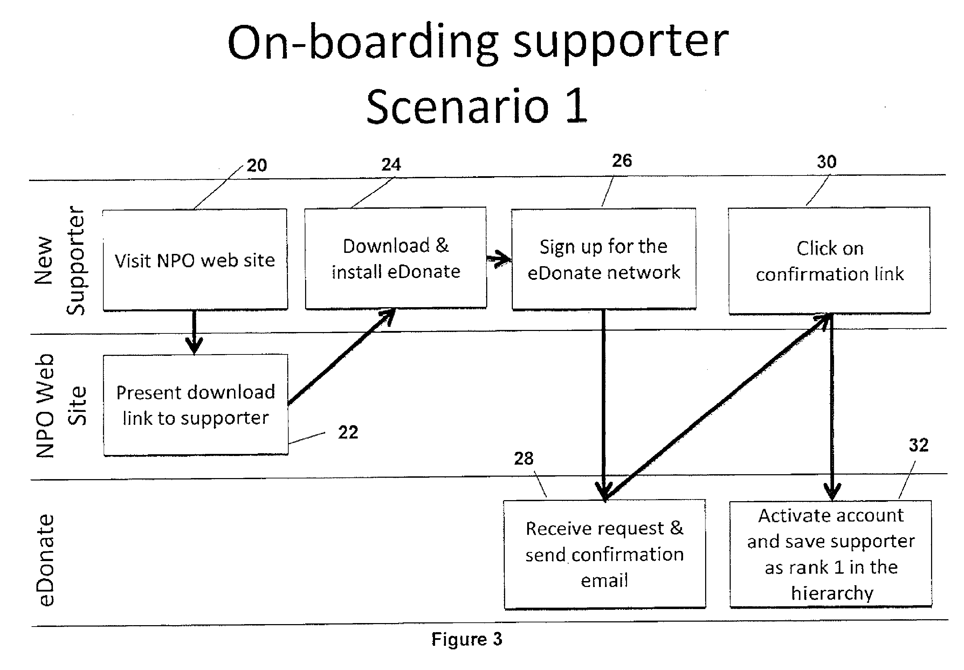

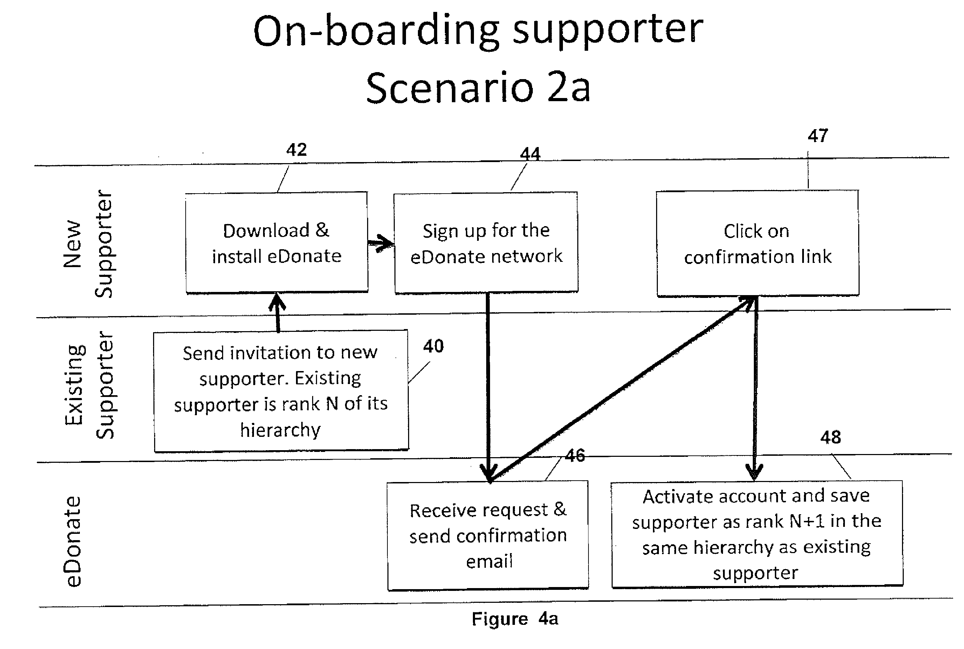

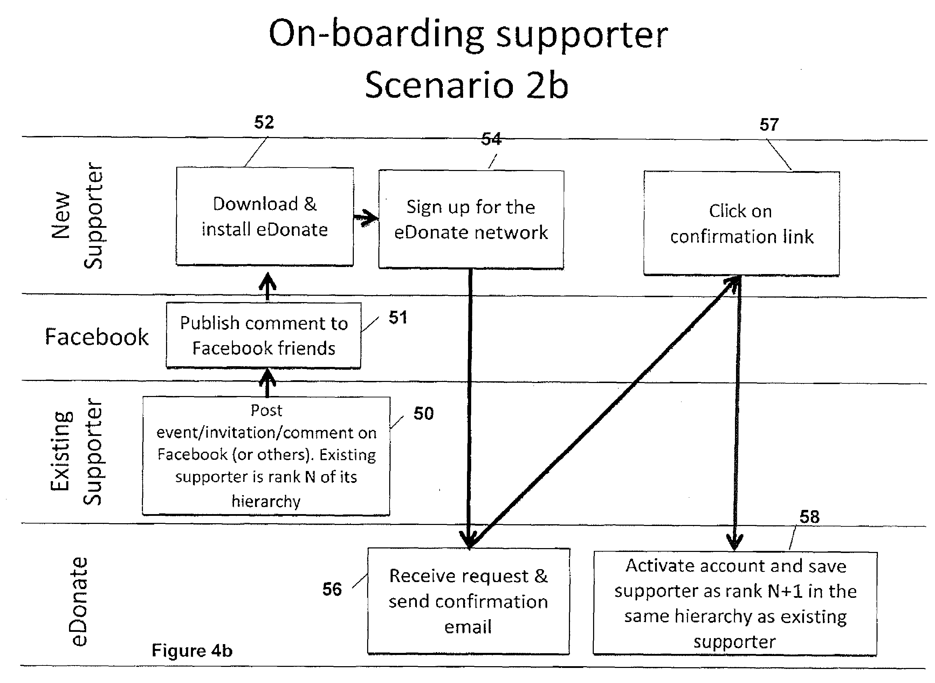

With reference to **Figures 3, 4a** and **4b,** there are shown three different scenarios for bringing a new supporter on-board to a NPO web site, by way of non-limiting example. **Figure 3** shows a viewer who visits the web site of an NPO in which he is interested (block **20).** The NPO website presents a download link to the viewer (block **22)** for the application or widget of the organizing body for that NPO. The viewer now downloads and installs the widget or application (block **24)** and signs up for the organizing body network related to that NPO (block **26).** The sign up information is received by the organizing body, which adds the viewer to the network as a new supporter of that NPO and sends a confirmation e-mail (block **28).** By clicking on a confirmation link (block **30),** the new supporter confirms his participation, and the organizing body activates his account and saves the supporter as rank 1 in the hierarchy (block **32).**

**Figure 4a** illustrates the case of an existing supporter inviting a friend to join his network. The existing supporter is rank N of the organization's hierarchy. The existing supporter sends an invitation to his friend (block **40).** His friend now downloads and installs the widget or application (block **42)** and signs up for the organizing body network related to that NPO (block **44**). The sign up information is received by the organizing body, which adds the viewer to the network as a new supporter of that NPO and sends a confirmation e-mail (block **46).** By clicking on a confirmation link (block **47),** the new supporter confirms his participation, and the organizing body activates his account and saves the supporter as rank N+1 in the same hierarchy as the existing supporter (block **48).**

**Figure 4b** is similar to **Figure 4a,** but here the invitation is posted on another social networking website, or the like, here illustrated as Facebook. Thus, the existing supporter posts an invitation/event/comment on his Internet networking page (block **50).** The social network (e.g., Facebook) publishes the comment to the existing supporter's friends (block **51).** One of his friends now downloads and installs the widget or application (block **52)** and signs up for the organizing body network related to that NPO (block **54).** The sign up information is received by the organizing body, which adds the viewer to the network as a new supporter of that NPO and sends a confirmation e-mail (block **56).** By clicking on a confirmation link (block **57),** the new supporter confirms his participation, and the organizing body activates his account and saves the supporter as rank N+1 in the same hierarchy as the existing supporter (block **58).**

While the invention has been described with respect to a limited number of embodiments, it will be appreciated that many variations, modifications and other applications of the invention may be made. It will further be appreciated that the invention is not limited to what has been described hereinabove merely by way of example. Rather, the invention is limited solely by the claims which follow.

## Claims

**1.** A method for recruiting supporters, the method comprising:

connecting a processor of an organization seeking supporters to a processor of a central organizing body (COBP);
providing a software application for connecting a device, including a device processor, of at least one supporter of said organization to said COBP;
transferring organization content from said organization to said COBP;
forwarding said content by said COBP for display to at least one of said supporters;
calculating a recognition value for each supporter as a function of display of said organization content to said supporter according to pre-selected criteria; and
receiving revenue by said COBP as a function of said recognition value according to pre-defined criteria.

**2.** The method according to claim 1,
further comprising causing said supporter to recruit at least one hierarchical child supporter, having a processor device connected to said organization to said COBP, to create a multi-level network of supporters;
calculating a recognition value for each said child supporter as a function of display of said organization content to said child supporter according to said pre-selected criteria; and
re-calculating said recognition value for said supporter as a function of both said display of said organization content to said supporter according to said pre-selected criteria and also as a function of the calculated recognition values of each said child supporter in said multi-level network of supporters created by said supporter.

**3.** The method according to claim 1, further comprising, before said step of receiving revenue:

coupling a processor of at least one source of advertising content and advertising revenue to said COBP;
transferring advertising content from said source to said COBP;
forwarding said advertising content by said COBP to at least one of said supporters;
calculating advertising revenue associated with display of said advertising content to each said supporter based on pre-defined criteria; and
calculating said recognition value for each supporter also as function of said advertising revenue associated with said supporter;
wherein said step of receiving revenue includes receiving said calculated advertising revenue from said source of advertising revenue.

**4.** The method according to claim 2, further comprising:

coupling a processor of at least one source of advertising content and advertising revenue to said COBP;
transferring advertising content from said source to said COBP;

forwarding said advertising content by said COBP to at least one of said supporters; calculating advertising revenue associated with display of said advertising content to each said supporter based on pre-defined criteria; and calculating said recognition value for each supporter also as function of said advertising revenue associated with said supporter; wherein said step of receiving revenue includes receiving said calculated advertising revenue from said source of advertising revenue.

5. The method according to claim 3, further comprising donating a portion of said advertising revenue by said central organizing body to said organization.

6. The method according to claim 5, wherein said step of donating includes donating a portion which is a function of said pre-defined criteria.

7. The method according to claim 3, wherein said step of calculating a recognition value includes:

calculating advertising revenue generated by one of said supporters; and calculating said recognition value as a function of said calculated advertising revenue.

8. The method according to claim 4, wherein said step of calculating recognition includes:

calculating advertising revenue generated by one of said supporters; and adding to said advertising revenue a sum of recognition values of each hierarchical child of said one of said supporters.

9. The method according to claim 1, further comprising collecting data about said supporters by said COBP.

10. A system for recruiting support, the system comprising:

a central organizing body having a processor (COBP); a processor of an organization seeking supporters connected to said COBP for transferring organization content from said organization to said COBP; at least one supporter device of supporters of said organization, each said device including a processor running a software application for connecting said device to said COBP; means in said COBP for transferring content from said organization to at least one of said supporter devices for display on said device; and means in said COBP for calculating a recognition value for each supporter as a function of display of said organization content to said supporter according to pre-selected criteria; wherein said COBP includes a software application for receiving revenue as a function of said recognition value according to pre-defined criteria.

11. The system according to claim 10, wherein at least one of said supporter devices also is coupled to a least one child supporter device to form a hierarchical multi-level network.

12. The system according to claim 10, further comprising a processor of at least one source of advertising content and advertising revenue coupled to said COBP; means in said COBP for receiving advertising content from said source; means in said COBP for transferring said advertising content to at least one of said supporter devices; means in said COBP for calculating advertising revenue associated with display of said advertising content on each said supporter device based on pre-defined criteria; and means in said COBP for calculating said recognition value for each supporter also as function of said calculated advertising revenue associated with said supporter; and wherein said software application for receiving revenue includes software for receiving said calculated advertising revenue from said source of advertising revenue.

13. The system according to claim 11, further comprising a processor of at least one source of advertising content and advertising revenue coupled to said COBP; means in said COBP for receiving advertising content from said source; means in said COBP for transferring said advertising content to at least one of said supporter devices; means in said COBP for calculating advertising revenue associated with display of said advertising content on each said supporter device based on pre-defined criteria; and means in said COBP for calculating said recognition value for each supporter also as function of said calculated advertising revenue associated with said supporter and with the multi-level network of supporters created by said supporter; and wherein said software application for receiving revenue includes software for receiving said calculated advertising revenue from said source of advertising revenue.

14. The system according to claim 10, comprising a plurality of said organizations seeking supporters, each coupled independently to said COBP.

NPO 2

14

Supporter 2

16

Supporter 12

Supporter 1

Supporter 11

16

Supporter 111

donations

NPO 2 application content

Supporter info

NPO 2 application content

Central Organizing Body (COBP)

10

Organization 1 application content

Non commercial organization

14

donations

Organization 1 application content

Supporter info

Supporter N

16

Ad content

Cash

Viewer info

Advertisers

12

Figure 1

# Recognition Affectation

Figure 2a

| Supporter | Ad Revenue | Recognition Amount: $$R_j = Ad_j + \sum_1^N R_i^j$$ |
|---|---|---|
| $R^0_2$ | $1 | $6.5 (1+2+3+0.5) |
| $R^2_5$ | $2 | $2 |
| $R^2_6$ | $0.5 | $3 (=0.5+1.5+1) |
| $R^2_7$ | $0.5 | $0.5 |
| $R^6_8$ | $1 | $1 |
| $R^6_9$ | $1.5 | $1.5 |

Figure 2b

EP 2 273 433 A1

# On-boarding supporter
## Scenario 1

Figure 3

# On-boarding supporter
# Scenario 2a

Figure 4a

# On-boarding supporter
## Scenario 2b

Figure 4b

EP 2 273 433 A1

Europäisches
Patentamt

European
Patent Office

Office européen
des brevets

# EUROPEAN SEARCH REPORT

Application Number

EP 10 16 7218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités" JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525 ISSN: 0170-9291 * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-14 | INV. G06Q10/00 G06Q30/00 |

TECHNICAL FIELDS SEARCHED (IPC)

G06Q

The present search report has been drawn up for all claims

| Place of search | Date of completion of the search | Examiner |
|---|---|---|
| The Hague | 30 September 2010 | Nicoli, Félix |

EPO FORM 1503 03.82 (P04C01)

Europäisches
Patentamt

European
Patent Office

Office européen
des brevets

**EUROPEAN SEARCH REPORT**

Application Number

EP 10 16 7218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. *<br>----- | | |
| | | | **TECHNICAL FIELDS SEARCHED (IPC)** |
| | The present search report has been drawn up for all claims | | |

| Place of search | Date of completion of the search | Examiner |
|---|---|---|
| The Hague | 30 September 2010 | Nicoli, Félix |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)